# EUROPEAN PATENT APPLICATION

(11) **EP 1 736 355 A2**
(43) Date of publication of application: **27.12.2006**
(21) Application number: 06012738.8
(22) Date of filing: 21.06.2006
(51) Int. Cl.: B60L 11/06, B60L 11/18

(54) **Electrical power train of vehicle**

(30) Priority: 21.06.2005 JP 2005180218
(71) Applicant: HITACHI, LTD., Chiyoda-ku Tokyo 100-8280 (JP)
(72) Inventor: Fujino, Shinichi Hitachi, Ltd. Int. Prop. Group, Chiyoda-ku Tokyo 100-8220 (JP); Yamamoto, Daisuke Hitachi, Ltd. Int. Prop. Group, Chiyoda-ku Tokyo 100-8220 (JP); Katsuhama, Kenta Hitachi, Ltd. Int. Prop. Group, Chiyoda-ku Tokyo 100-8220 (JP); Seto, Sadashi Hitachi, Ltd. Int. Prop. Group, Chiyoda-ku Tokyo 100-8220 (JP)
(74) Representative: Beetz & Partner

(57) **Abstract**

The present invention relates to an electrical power train of a vehicle, which can produce a sufficient driving force and can improve response. Front wheels (26A, 26B) are driven by an engine (20), and rear wheels (36A, 36B) are driven by a DC motor (30). Amotor generator (40) produces a driving force for starting the engine (20) and is driven by the engine (20) to generate electric power. A single inverter (62) in a motor controller (60) is connected between the motor generator (40) and the DC motor (30). The motor controller (60) PWM-drives the motor generator (40) in accordance with vector control through the inverter (62).

## Description

### BACKGROUND OF THE INVENTION

### 1. Field of the Invention

The present invention relates to an electrical power train of a vehicle, and more particularly to an electrical power train suitable for use in a vehicle of the type including a motor to drive a wheel which is not driven by an engine.

### 2. Description of the Related Art

As known electrical power trains, Patent Document 1 (JP-A-2003-159953) discloses one example in which a DC motor is driven by an output of a high-voltage generator driven by an engine. Also, Patent Document 2 (JP-A-2004-312854) discloses another example in which a DC motor is driven by an output of a high-voltage generator and electric power is supplied to 12-V auxiliaries by using a DC/DC converter.

### SUMMARY OF THE INVENTION

The electrical power train disclosed in JP-A-2003-159953, however, requires a 12-V generator for the 12-V auxiliaries in addition to the high-voltage generator. This means the necessity of providing two generators in a vehicle, i.e., the 12-V generator and the high-voltage generator for driving the vehicle. Because various kinds of equipment are disposed in an engine room, the provision of the two generators in the engine room gives rise to a problem of imposing severer limitations on layout of the equipment.

Another problem with the electrical power train disclosed in JP-A-2003-159953 is that, when the engine revolution speed is low in an engine idle state, for example, electric power generated by the driving generator is low and the driving DC motor cannot obtain a sufficient driving force.

Similarly, the electrical power train disclosed in JP-A-2004-312854 has the problem that, when the engine revolution speed is low in the engine idle state, for example, electric power generated by the driving generator is low and, because of influences of loads of the 12-V auxiliaries, the driving DC motor cannot obtain a sufficient driving force.

Further, the electrical power train of the type driving the DC motor by the output voltage of the generator, as disclosed in JP-A-2003-159953 and JP-A-2004-312854, have still another problem that response of the generator is low and a response delay occurs when a high driving force is required in a transient state, e.g., in the case of a slip.

An obj ect of the present invention is to provide an electrical power train of a vehicle, which can produce a sufficient driving force and can improve response.
(1) To achieve the above object, the present invention provides an electrical power train of a vehicle in which at least one of a plurality of wheels is driven by an internal combustion engine, wherein the electrical power train comprises a DC motor for driving at least one remaining wheel of the plurality of wheels; and/or a motor generator receiving AC power and producing a driving force to drive the internal combustion engine, and driven by the internal combustion engine to generate AC power.
   With those features, a sufficient driving force can be obtained and response can be improved.
(2) In above (1), preferably, the electrical power train of the vehicle may further comprise a single inverter for converting an alternating current to a direct current and converting a direct current to an alternating current, the AC side of the inverter being connected to the motor generator, the DC side of the inverter being connected to the DC motor.
(3) In above (2), preferably, the electrical power train of the vehicle may further comprise a control unit for controlling the inverter and the motor generator, wherein the control unit PWM-drives the motor generator through the inverter in accordance with vector control.
(4) In above (1), preferably, the electrical power train of the vehicle may further comprise a DC/DC converter for converting DC power converted by the inverter to a low-voltage DC power; and a single low-voltage battery for storing the low-voltage DC power converted by the DC/DC converter.
(5) In above (4), preferably, the electrical power train of the vehicle may further comprise an storage device for storing the high-voltage DC power converted by the inverter, wherein when the internal combustion engine is started after stop of idling, the driving force is produced from the motor generator by using the power stored in the storage device in addition to the power stored in the low-voltage battery, thereby starting the internal combustion engine.
(6) In above (5), preferably, the electrical power train of the vehicle may further comprise a cutoff unit disposed between the storage device and the DC motor and electrically cutting off application of the voltage of the storage device to the DC motor.
(7) In above (6), preferably, the cutoff unit is capable of controlling a voltage applied to the DC motor, and the control unit controls the cutoff unit to control the voltage applied to the DC motor from the storage device when the vehicle is started.
(8) In above (5), preferably, the control unit performs control to stored power in the storage device before stop of idling of the internal combustion engine.
(9) Also, to achieve the above object, the present invention may provide an electrical power train of a vehicle in which at least one of a plurality of wheels is driven by an internal combustion engine, wherein the electrical power train may comprise a DC motor for driving at least one remaining wheel of the plurality of wheels; a motor generator receiving AC power and producing a driving force to drive the internal combustion engine, and driven by the internal combustion engine to generate AC power; and/or an inverter for converting an alternating current to a direct current and converting a direct current to an alternating current, the AC side of the inverter being connected to the motor generator, the DC side of the inverter being connected to the DC motor.
   With those features, a sufficient driving force can be obtained and response can be improved.
(10) In above (9), preferably, the electrical power train of the vehicle may further comprise a control unit for controlling the inverter and the motor generator, wherein the control unit PWM-drives the motor generator through the inverter in accordance with vector control.
(11) Further, to achieve the above object, the present invention may provide an electrical power train of a vehicle in which at least one of a plurality of wheels is driven by an internal combustion engine, wherein the electrical power train comprises a DC motor for driving at least one remaining wheel of the plurality of wheels; a motor generator receiving AC power and producing a driving force to drive the internal combustion engine, and driven by the internal combustion engine to generate AC power; a single inverter for converting an alternating current to a direct current and converting a direct current to an alternating current, the AC side of the inverter being connected to the motor generator, the DC side of the inverter being connected to the DC motor; a DC/DC converter for converting DC power converted by the inverter to a low-voltage DC power; and/or a single low-voltage battery for storing the low-voltage DC power converted by the DC/DC converter.
   With those features, the internal combustion engine can be stopped for the purpose of stopping idle and fuel economy can be improved.
(12) Still further, to achieve the above object, the present invention may provide an electrical power train of a vehicle in which at least one of a plurality of wheels is driven by an internal combustion engine, the electrical power train comprising a DC motor for driving at least one remaining wheel of the plurality of wheels; a motor generator receiving AC power and producing a driving force to drive the internal combustion engine, and driven by the internal combustion engine to generate AC power; a single inverter for converting an alternating current to a direct current and converting a direct current to an alternating current, the AC side of the inverter being connected to the motor generator, the DC side of the inverter being connected to the DC motor; a DC/DC converter for converting DC power converted by the inverter to a low-voltage DC power; a single low-voltage battery for storing the low-voltage DC power converted by the DC/DC converter; and/or an storage device for storing the high-voltage DC power converted by the inverter, wherein when the internal combustion engine is started after stop of idling, the driving force is produced from the motor generator by using the power stored in the storage device in addition to the power stored in the low-voltage battery, thereby starting the internal combustion engine.

With those features, it is possible to increase the driving force and to improve response at the starting.

According to the present invention, the electrical power train of the vehicle is realized which can ensure a sufficient driving force and faster response.

The above-mentioned features may be combined in any way, partly or as a whole.

### BRIEF DESCRIPTION OF THE DRAWINGS

Fig. 1 is a system block diagram showing an overall construction of a 4-wheel-drive vehicle in which is employed an electrical power train of a vehicle according to a first embodiment of the present invention;
Fig. 2 is a block diagram of a motor controller used in the electrical power train of the vehicle according to the first embodiment of the present invention;
Fig. 3 is a flowchart showing the control operation of the electrical power train of the vehicle according to the first embodiment of the present invention;
Fig. 4 is a systemblock diagram for explaining energy transfer during the control operation of the electrical power train of the vehicle according to the first embodiment of the present invention;
Fig. 5 is a systemblock diagram for explaining energy transfer during the control operation of the electrical power train of the vehicle according to the first embodiment of the present invention;
Fig. 6 is a graph for explaining the operation at restart performed by the electrical power train of the vehicle according to the first embodiment of the present invention;
Fig. 7 is a block diagram of an electrical power train of a vehicle according to a second embodiment of the present invention;
Fig. 8 is a flowchart showing the control operation of the electrical power train of the vehicle according to the second embodiment of the present invention; and
Fig. 9 is a block diagram of an electrical power train of a vehicle according to a third embodiment of the present invention.

### DESCRIPTION OF THE PREFERRED EMBODIMENTS

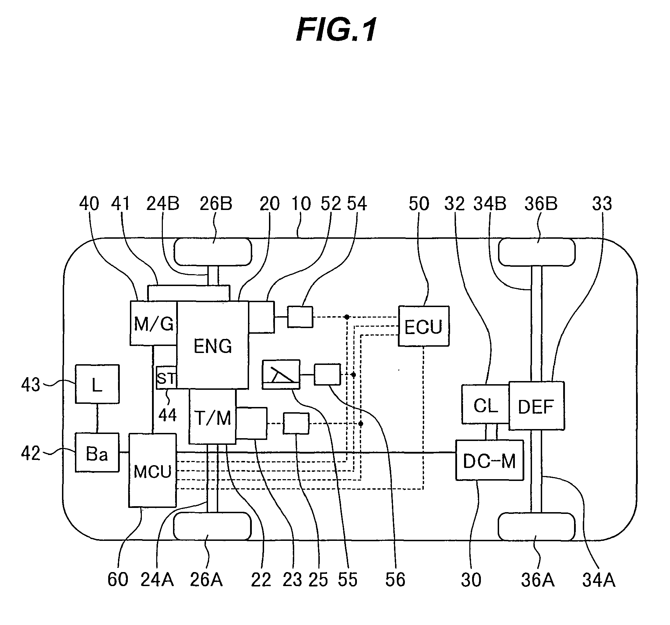

The construction and operation of an electrical power train of a vehicle according to a first embodiment of the present invention will be described below with reference to Figs. 1-6.

First, the following description is made, with reference to Fig. 1, of an overall construction of a 4-wheel-drive vehicle in which is employed the electrical power train of the vehicle according to the first embodiment.

Fig. 1 is a system block diagram showing the overall construction of the 4-wheel-drive vehicle in which is employed the electrical power train of the vehicle according to the first embodiment of the present invention.

A 4-wheel-drive vehicle 10 includes an engine (ENG) 20 and a motor (DC-M) 30. The motor 30 is constituted, for example, by a wound-field DC motor. A driving force of the engine 20 is transmitted to front wheels 26A and 26B through a transmission (T/M) 22 and first axles 24A and 24B, thereby driving the front wheels 26A and 26B. A driving force of the motor 30 is transmitted to rear axles 34A and 34B through a clutch (CL) 32 and a differential gear (DEF) 33, thereby driving rear wheels 36A and 36B. When the clutch 32 is disengaged, the motor 30 is mechanically disconnected from the side including the rear wheels 36A and 36B, whereby the driving force is not transmitted to the road surface from the rear wheels 36A and 36B.

While the above description is made in connection with the 4-wheel-drive vehicle of the type driving the front wheels 26A and 26B by the engine 20 and driving the rear wheels 36A and 36B by the motor 30, the arrangement may be modified such that the front wheels 26A and 26B are driven by the motor 30 and the rear wheels 36A and 36B are driven by the engine 20. Further, the present invention is also applicable to a vehicle having six or more wheels, e.g., a truck or a traction vehicle such as a trailer.

In an engine room, a motor generator (M/G) 40 is installed which is constituted by an AC motor generator coupled to the engine 20 through a belt 41. The motor generator 40 is constituted, for example, by a wound-field 3-phase AC motor, and it is capable of being driven and generating power at a voltage, e.g., usually 42 V, higher than the voltage (e.g., 12 V) of a vehicular-loaded battery. The motor generator 40 is used to restart the engine 20 through the belt 41. When the engine 20 is in a cold state, the engine 20 is started by a starter (ST) 44 which is driven by a 12-V vehicle-loaded battery (Ba) 42. The motor generator 40 is also used to drive the front wheels 26A and 26B through the engine 20 and the transmission 22. Further, the motor generator 40 is driven by the engine 20 through the belt 41 or by the front wheels 26A and 26B through the engine 20 and the transmission 22, thereby generating electric power. The electric power generated by the motor generator 40 serves not only as source power for the motor 30, but also as source power for charging the vehicle-loaded battery (Ba) 42 for power supply to other auxiliaries (L) 43 of the vehicle.

While, in the above description, the motor generator 40 is coupled to the engine 20 through the belt 41, another suitable coupling means, such as a chain, can also be used. Further, the motor generator 40 may be disposed between the engine 20 and the transmission 22 or within the transmission 22 as another option.

The output of the engine 20 is controlled by an electronic control throttle 52 which is driven in accordance with a command from an engine control unit (ECU) 50. The electronic control throttle 52 is provided with an accelerator opening sensor 54 for detecting an accelerator opening. When an accelerator pedal and a throttle which are mechanically linked with each other are used instead of the electronic control throttle 52, the accelerator opening sensor can be provided on the accelerator pedal. The ECU 50 controls the transmission 22. The transmission 22 is an automatic transmission and is automatically controlled so that a gear ratio selected by a select lever 23 is obtained. Theposition of the select lever 23 is detected by a gear position sensor 25. Alternatively, the transmission 22 may be a manual transmission.

The motor 30, the motor generator 40, the vehicle-loaded battery 42, and the other auxiliaries 43 are interconnected via a motor controller (MCU) 60. The motor controller 60 converts AC power generated by the motor generator 40 to DC power for supply to the motor 30. Also, the motor controller 60 controls the supply of the electric power generated by the motor generator 40 to the other auxiliaries 43 and the vehicle-loaded battery 42. Further, the motor controller 60 controls the supply of the electric power of the vehicle-loaded battery 42 to the motor 30 and the motor generator 40. In addition, the motor controller 60 decides and controls the driving force of the motor 30, the driving force or the generated electric power of the motor generator 40 based on various factors, i.e., the command from the ECU 50, the charging state of the vehicle-loaded battery 42, the accelerator opening sensor 54, the gear position sensor 25, a brake depression force sensor 56 attached to a brake pedal 55, and so on. Details of the control executed by the motor controller 60 will be described later. With the arrangement described above, the electrical power train of the vehicle can be realized by using two motors.

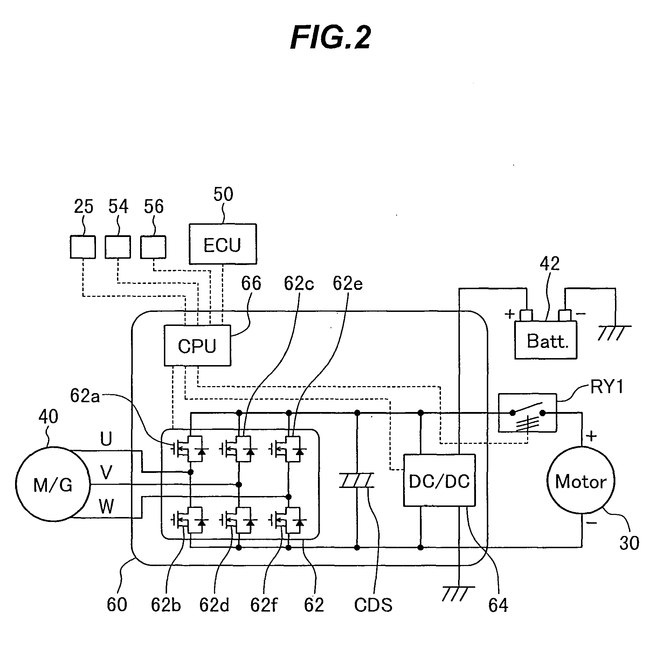

The construction of the motor controller 60 used in the electrical power train of the vehicle according to the first embodiment will be described below with reference to Fig. 2.

Fig. 2 is a block diagram of the motor controller used in the electrical power train of the vehicle according to the first embodiment of the present invention. Note that the same reference numerals as those in Fig. 1 denote the same components.

The motor controller 60 comprises an inverter 62, a DC/DC converter 64, an storage device (capacitor) CDS, and a CPU 66. The inverter 62 includes switching devices 62a, 62b, 62c, 62d, 62e and 62f. In other words, there are three arms each including one pair of upper and lower switching devices, which correspond to AC three phases of the motor generator 40.

The capacitor CDS storeds a high voltage (e.g. , 42 Vat maximum) converted to DC by the inverter 62 through AC/DC conversion from the AC output of the motor generator 40. The high voltage stored in the capacitor CDS is used at starting after the stop of idling where the engine 20 is restarted after stopping idle. The motor generator 40 is driven as the motor by the high voltage stored in the capacitor CDS. Generally, a capacitor for smoothing and rectifying a ripple voltage generated by the switching operations of inverter's switching devices is connected to the output side of an inverter, and the capacitance of such a smoothing and rectifying capacitor is small at a level of, e.g., 0.005 F - 0.01 F. On the other hand, the capacitor CDS in this embodiment has a large capacitance of, e.g., about 1 F. Additionally, the capacitor CDS also serves to smooth a ripple voltage generated by the switching operations of the inverter 62 and the DC/DC converter 64.

The CPU 66 controls the motor 30 and the motor generator 40. More specifically, the CPU 66 controls the output voltage of the motor generator 40 by controlling a field current of the motor generator 40. The output voltage of the motor generator 40 is converted to a DC voltage by the inverter 62, and the DC voltage is supplied to an armature coil of the motor 30. The larger an armature current, the larger is output torque of the motor 30. Accordingly, the output torque of the motor 30 can be controlled by controlling the field current of the motor generator 40 by the CPU 66. Also, the CPU 66 enables the motor 30 to be rotated at high speed by controlling a field current of the motor 30, for example, by performing field weakening control.

The number of phases of the motor generator 40 is not limited to three, and the motor generator may have another number of phases. In such a case, it is just required that the number of arms of the inverter 62 is modified corresponding to the number of phases of the motor. While the switching devices 62a, 62b, 62c, 62d, 62e and 62f are shown as being MOSFETs, they may be formed of other suitable devices, such as IGBTs and flywheel diodes in combination, or bipolar transistors. Further, while the switching devices 62a, 62b, 62c, 62d, 62e and 62f are each shown as being a single device, each switching device may be constituted by connecting two or more devices in parallel. The DC/DC converter 64 may be of either the insulated or non-insulated type.

Upper and lower ends of all the arms of the inverter 62 are connected to the motor 30 in parallel. Respective junctions between the switching devices 62a and 62b of the inverter 62, between the switching devices 62c and 62d thereof, and between switching devices 62e and 62f thereof are connected to output terminals U, V and W of the motor generator 40. A positive pole and a negative pole of the inverter 62 are connected respectively to a positive pole and a negative pole of the DC/DC converter 64 at one end thereof. At the other end of the DC/DC converter 64, its positive pole is connected to a positive pole of the vehicle-loaded battery 42 and its negative pole is connected to a grounding part of the vehicle. In other words, in this first embodiment, only one inverter 62 is used and is connected between the motor generator 40 and the motor 30.

The capacitor CDS is connected to the inverter 62 in parallel.

The CPU 66 is connected to be capable of driving the inverter 62 and the DC/DC converter 64. The CPU 66 controls the motor 30 and the motor generator 40 by PWM-driving the inverter 62 and the DC/DC converter 64 based on various factors, i.e., the command from the ECU 50, the charging state of the vehicle-loaded battery 42, the accelerator opening sensor 54, the gear position sensor 25, the brake depression force sensor 56, and so on. More specifically, the CPU 66 PWM-drives the inverter 62 in accordance with vector control in which a d-axis current id and a q-axis current *iq* are controlled, to thereby control the motor generator 40. As a result, power generation at low rotation speed can be performed and the response can be improved. Note that, instead of the PWM driving, the CPU 66 may also perform other suitable vector control, e.g., rectangular wave control.

With the known method in which the high-voltage generator is driven by the engine to produce a high voltage and the DC motor driving the rear wheel is driven by the high voltage, when the engine revolution speed is low in the idle state, for example, the output voltage of the high-voltage generator is low and a sufficient driving force cannot be obtained from the DC motor for driving the rear wheels. In contrast, by employing the motor generator and driving the motor generator in accordance with the vector control as described above, the output voltage of the motor generator can be maintained high and a sufficient driving force can be obtained from the DC motor for driving the rear wheels even when the engine revolution speed is low in the idle state, for example. Accordingly, acceleration performance at starting can be improved.

A relay RY1 is connected between a positive pole of the motor 30 and the motor controller 60, and the on/off-operation of the relay RY1 is controlled by the CPU 66. As an alternative, the relay RY1 may be connected to a negative pole of the motor 30. Also, the relay RY1 may be disposed inside the motor controller 60.

With the arrangement described above, since electric power can be transferred among the motor 30, the motor generator 40, and the vehicle-loaded battery 42, the capacitance of the capacitor CDS can be made smaller and the inverter 62 is required just for one motor, thus resulting in a reduction of the power train size.

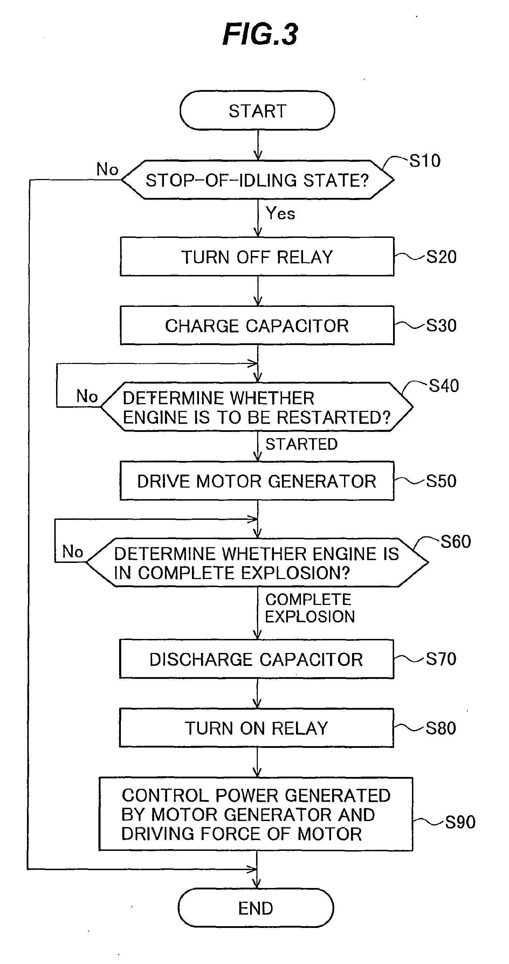

The control operation of the electrical power train of the vehicle according to the first embodiment will be described below with reference to Figs. 3 and 4-6.

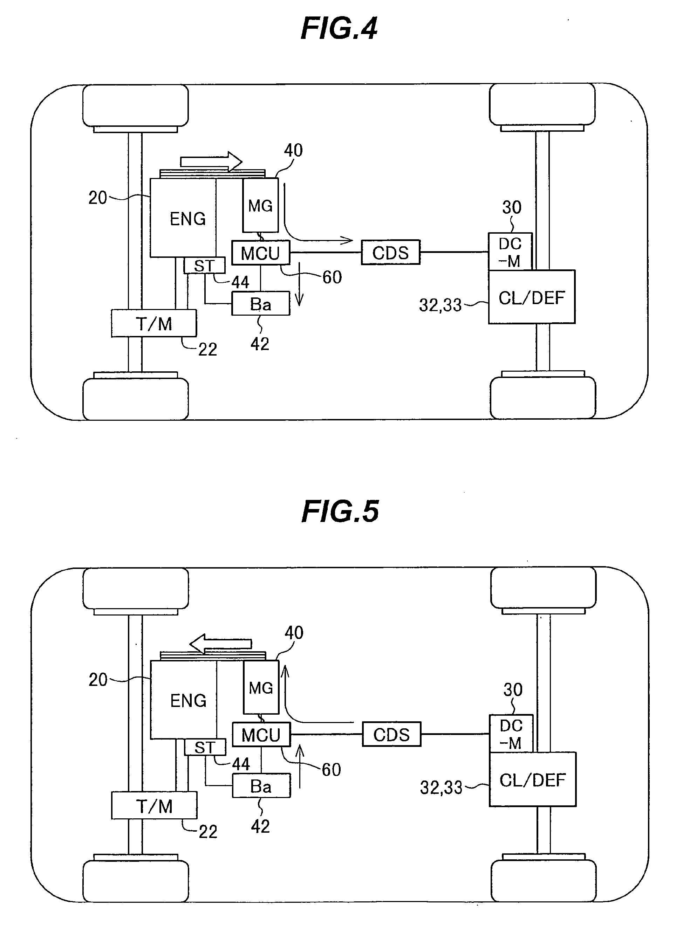

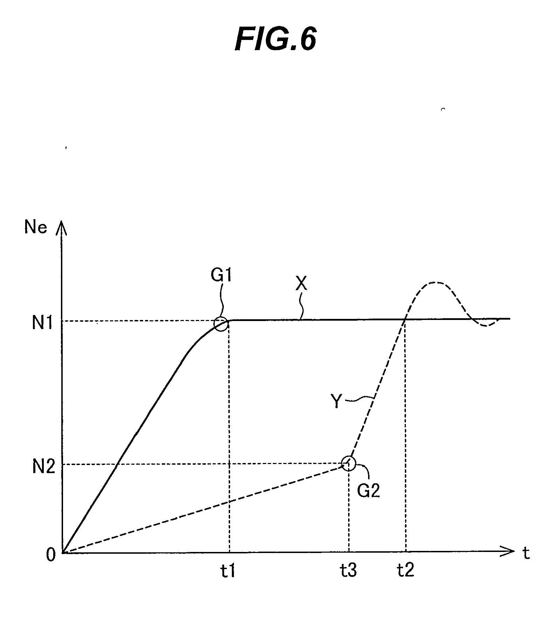

Fig. 3 is a flowchart showing the control operation of the electrical power train of the vehicle according to the first embodiment of the present invention. Figs. 4 and 5 are each a system block diagram for explaining energy transfer during the control operation of the electrical power train of the vehicle according to the first embodiment of the present invention. In Figs. 4 and 5, a thick-line arrow represents the flow of mechanical energy, and a thin-line arrow represents the flow of electrical energy. Fig. 6 is a graph for explaining the operation at restart performed by the electrical power train of the vehicle according to the first embodiment of the present invention. Note that, in Figs. 4 and 5, the same reference numerals as those in Fig. 1 denote the same components.

As described above with reference to Figs. 1 and 2, the electrical power train of the vehicle according to the first embodiment is featured in including the motor generator for driving a first wheel and the DC motor for driving a second wheel. Another feature is that the motor generator and the DC motor are connected to each other by one inverter. The electrical power train of the vehicle according to the first embodiment, which has those features, is intended to perform specific control particularly when the engine is restarted after the engine has been stopped for the purpose of stopping idle, i.e., at the time of starting after the stop of idling. With such specific control, specific advantages are obtained. Therefore, the following description is made primarily of that point.

In step S10 of Fig. 3, the CPU 66 of the motor controller 60 determines whether the engine is to be stopped for the purpose of stopping idle (i.e. , whether the engine is in a stop-of-idling state), based on various factors, i.e., the command from the ECU 50, the accelerator opening sensor 54, the gear position sensor 25, the brake depression force sensor 56, and so on. If the engine is not in the stop-of-idling state, the control process is brought to an end.

If it is determined that the engine is in the stop-of- idling state, the CPU 66 turns off the relay RY1 in step S20.

Then, in step S30, the CPU 66 charges the capacitor CDS by utilizing the electric power generated by the motor generator 40. More specifically, as shown in Fig. 4, the motor generator 40 is driven by the driving force of the engine 20, and the capacitor CDS is charged with the electric power generated by the motor generator 40. The electric power generated by the motor generator 40 is also charged in the vehicle-loaded battery 42. The voltage charged in the capacitor CDS at this time is higher than 12 V of the vehicle-loaded battery 42. The voltage of the electric power generated by the motor generator 40 is, e.g., about 36 V though depending on the rotation speed and the vector control status of the motor generator 40. Because the charging of the capacitor CDS is quickly performed, the ECU 50 can stop the revolution of the engine 20 to establish a state where the idling is stopped, after the lapse of a predetermined time from notification of a capacitor charging command from the CPU 66 to the ECU 50.

Then, in step S40, the CPU 66 determines whether engine restart conditions (i.e., conditions for the starting after the stop of idling) are satisfied, based on the command from the ECU 50 and the brake depression force sensor 56.

If the engine restart conditions are satisfied, the CPU 66 rotates the motor generator 40 in step S50 by using the high voltage charged in the capacitor CDS and the voltage of the vehicle-loaded battery 42 so that the engine 20 is driven by the rotation driving force of the motor generator 40. In other words, as shown in Fig. 5, the high voltage charged in the capacitor CDS and the voltage of the vehicle-loaded battery 42 are utilized to rotate the motor generator 40, and the engine 20 is driven by the rotation driving force of the motor generator 40.

Then, in step S60, the CPU 66 determines whether the engine 20 is brought into a complete explosion state, based on the command from the ECU 50, etc.

If it is determined that the engine 20 is in the complete explosion state, the CPU 66 discharges the capacitor CDS to a preset voltage in step S70. This is intended to prevent such an event that, if the high voltage remains charged in the capacitor CDS, the motor 30 is momentarily driven to rotate at high speed by the remaining high voltage when the relay RY1 is turned on later, thus resulting in a slip of the rear wheels.

Then, in step S80, the CPU 66 turns on the relay RY1.

Then, in step S90, the CPU 66 computes the driving force of the motor 30 based on various factors, i.e., the command from the ECU 50, the charging state of the vehicle-loaded battery 42, the accelerator opening sensor 54, the gear position sensor 25, and so on. Further, the CPU 66 controls the electric power generated by the motor generator 40 and the driving force of the motor 30.

Changes of the engine revolution speed at the starting after the stop of idling will be described below with reference to Fig. 6. In Fig. 6, a solid line X represents changes of the engine revolution speed when the starting after the stop of idling is performed by the electrical power train of the vehicle according to the first embodiment. A broken line Y represents changes of the engine revolution speed when the motor generator 40 is driven by using only the 12-V vehicle-loaded battery 42.

According to the first embodiment, at the starting after the stop of idling, the motor generator 40 is driven by both the voltage (e.g., 12 V) of the vehicle-loaded battery 42 and the voltage (e.g., 36 V) of the capacitor CDS. Therefore, when the voltage is supplied to the motor generator 40, starting from a time 0, to rotate the engine 20 by the driving force of the motor generator 40, an engine revolution speed Ne can be quickly increased.

On the other hand, when only the voltage (e.g., 12 V) of the vehicle-loaded battery 42 is supplied to the motor generator 4 0 to rotate the engine 20 by the driving force of the motor generator 40, the engine revolution speed Ne can be just moderately increased.

With the first embodiment, therefore, the engine revolution speed Ne is quickly increased as represented by the solid line X in Fig. 6. By supplying gasoline to the engine at timing G1 immediately before the engine revolution speed Ne reaches N1 (e.g., 1000 rpm), the engine is soon brought into the complete explosion state at a time t1. If the engine is brought into the complete explosion state, the operation of the motor generator 40 is switched over from a motor driving mode to a power generation mode so that the power generation can be started at once. It is hence possible to promptly start the driving of the motor 30 by the electric power generated by the motor generator 40, and to improve the acceleration performance when the vehicle is accelerated at the starting after the stop of idling. In this case, the time t1 is, e.g., about 0.2 sec.

On the other hand, when only the voltage (e.g., 12 V) of the vehicle-loaded battery 42 is supplied to the motor generator 40 to rotate the engine 20 by the driving force of the motor generator 40, the engine revolution speed Ne is moderately increased until a time t3. By supplying gasoline to the engine at timing G2 at which the engine revolution speed Ne reaches N2 (e.g., 400 rpm), the engine gradually starts the operation from the timing G2. Then, the engine is brought into the complete explosion state at a time t2. In this case, the time t2 is, e.g., about 0.4 sec.

Assuming here that the electric power required for the starting after the stop of idling (i.e., for the restart of the engine) is 3 kW, the electric power taken out momentarily (not longer than 1 sec) from the ordinary 12-V battery is about 2 kW, and therefore the electric power taken out from the capacitor CDS is required to be about 1 kW. Also, assuming that the capacitance of the capacitor CDS is 0.6 F as mentioned above, the charged voltage and current are respectively 36 V and 30 A, and the time required for the restart of the engine is, e.g., 0.3 sec, the electric power capable of being taken out from the capacitor for the restart of the engine is 1 kW. Stated another way, the power capacity of the capacitor CDS is not required to be so large in comparison with that of the 12-V battery, and the engine can be promptly restarted by holding a higher voltage in the capacitor CDS than the 12-V battery.

According to the first embodiment, as described above, since the generator used in the electrical power train is only one, i.e., the motor generator 40, limitations imposed on layout are reduced.

Also, since the motor generator for generating the electric power is PWM-driven in accordance with the vector control by using the inverter, the power generation can be performed even at low rotation speed and faster response can be obtained. Therefore, the DC motor driven by the electric power generated by the motor generator and driving the rear wheels can produce a larger driving force, and the response can be improved. Even when a high driving force is required in a transient state, e.g., in the case of a slip, there occurs no response delay. Further, a reduction in size and cost can be realized. If a high-voltage battery of 200 V or 300 V is employed and the rear wheel are driven by a 200-V or 300-V AC motor, a large driving force can be obtained and the response can be improved. However, a size reduction of the power train cannot be realized due to the necessity of the high-voltage, large-sized battery and the large-sized AC motor. In addition, generally, a DC motor has higher reliability than an AC motor.

Moreover, since the starting after the stop of idling can be performed by utilizing the voltage charged in the capacitor to drive the motor generator, the engine can be stopped for the purpose of stopping idle, and therefore fuel economy is improved.

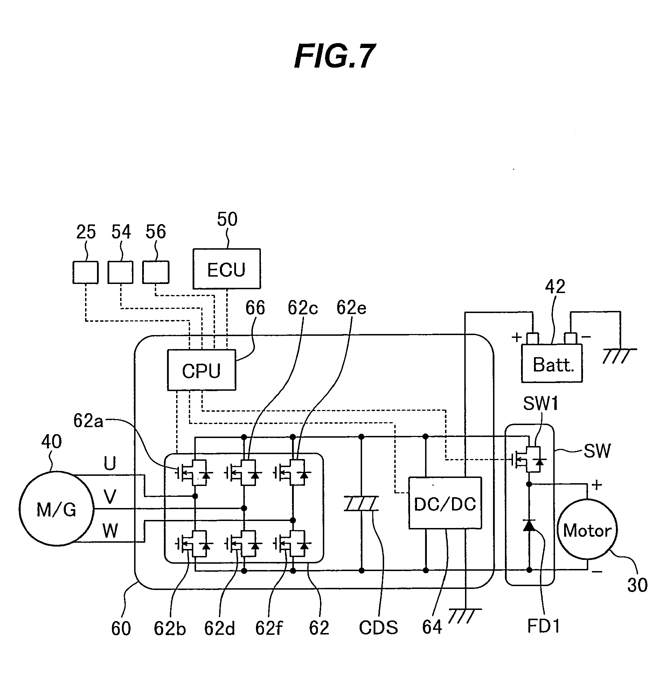

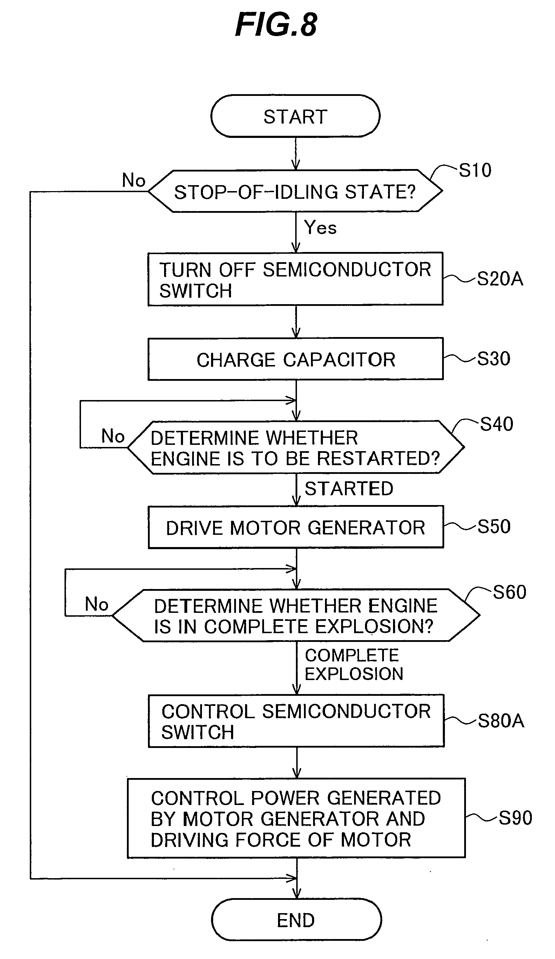

The construction and operation of an electrical power train of a vehicle according to a second embodiment of the present invention will be described below with reference to Figs. 7 and 8.

First, the following description is made, with reference to Fig. 7, of the construction of the electrical power train of the vehicle according to the second embodiment. The overall construction of a 4-wheel-drive vehicle in which is employed the electrical power train of the vehicle according to the second embodiment is similar to that shown in Fig. 1.

Fig. 7 is a block diagram of the electrical power train of the vehicle according to the second embodiment of the present invention. Note that the same reference numerals as those in Figs. 1 and 2 denote the same components.

In this second embodiment, a semiconductor switch SW is used instead of the relay RY1 shown in Fig. 2. The semiconductor switch SW is constituted by connecting a switching device SW1 and a flywheel diode FD1 in series. A positive pole of the switching device SW1 and a negative pole of the flywheel diode FD1 are connected respectively to the positive pole and the negative pole of the inverter 62. The motor 30 is connected to the flywheel diode FD1 in parallel. A gate terminal of the switching device SW1 is connected to the CPU 66 such that the switching device SW1 can be driven by the CPU 66.

While the switching device SW1 is shown as being a MOSFET, it may be formed of another suitable device, such as an IGBT or a bipolar transistor. Conversely, the flywheel diode FD1 may be formed of a MOSFET. Also, the connection between the switching device SW1 and the flywheel diode FD1 may be modified such that the switching device SW1 is arranged in the negative side, the flywheel diode FD1 is arranged in the positive side, and the motor 30 is connected to the flywheel diode FD1 in parallel. Further, the semiconductor switch SW may be disposed inside the motor controller 60.

The control operation of the electrical power train of the vehicle according to the second embodiment will be described below with reference to Fig. 8.

Fig. 8 is a flowchart showing the control operation of the electrical power train of the vehicle according to the second embodiment of the present invention. Note that the same step numbers as those in Fig. 3 represent the same processing.

In step S10, the CPU 66 of the motor controller 60 determines whether the engine is to be stopped for the purpose of stopping idle (i.e., whether the engine is in a stop-of-idling state), based on various factors, i.e., the command from the ECU 50, the accelerator opening sensor 54, the gear position sensor 25, the brake depression force sensor 56, and so on. If the engine is not in the stop-of-idling state, the control process is brought to an end.

If it is determined that the engine is in the stop-of- idling state, the CPU 66 turns off the semiconductor switch SW in step S20A.

Then, in step S30, the CPU 66 charges the storage device (capacitor) CDS by utilizing the electric power generated by the motor generator 40. The ECU 50 stops the revolution of the engine 20 to establish a state where the idling is stopped.

Then, in step S40, the CPU 66 determines whether engine restart conditions (i.e., conditions for the starting after the stop of idling) are satisfied, based on the command from the ECU 50 and the brake depression force sensor 56.

If the engine restart conditions are satisfied, the CPU 66 rotates the motor generator 40 in step S50 by using the high voltage charged in the capacitor CDS and the voltage of the vehicle-loaded battery 42 so that the engine 20 is driven by the rotation driving force of the motor generator 40.

Then, in step S60, the CPU 66 determines whether the engine 20 is brought into a complete explosion state, based on the command from the ECU 50, etc.

If it is determined that the engine 20 is in the complete explosion state, the CPU 66 computes the driving force of the motor 30 in step S80A based on various factors, i.e., the command from the ECU 50, the charging state of the vehicle-loaded battery 42, the accelerator opening sensor 54, the gear position sensor 25, and so on. Further, the CPU 66 controls the amount of a current supplied through the semiconductor switch SW for driving the motor 30 by the high voltage charged in the capacitor CDS.

Then, in step S90, while computing the driving force of the motor 30 based on various factors, i.e., the command from the ECU 50, the charging state of the vehicle-loaded battery 42, the accelerator opening sensor 54, the gear position sensor 25, and so on, the CPU 66 controls the electric power generated by the motor generator 40 and the driving force of the motor 30.

According to the second embodiment, as described above, since the generator used in the electrical power train is only one, i.e., the motor generator 40, limitations imposed on layout are reduced.

Also, even when a high driving force is required in a transient state, e.g., in the case of a slip, the required driving force can be obtained at once without a response delay. Further, a reduction in size and cost can be realized.

In addition, since the engine can be stopped for the purpose of stopping idle, fuel economy is improved.

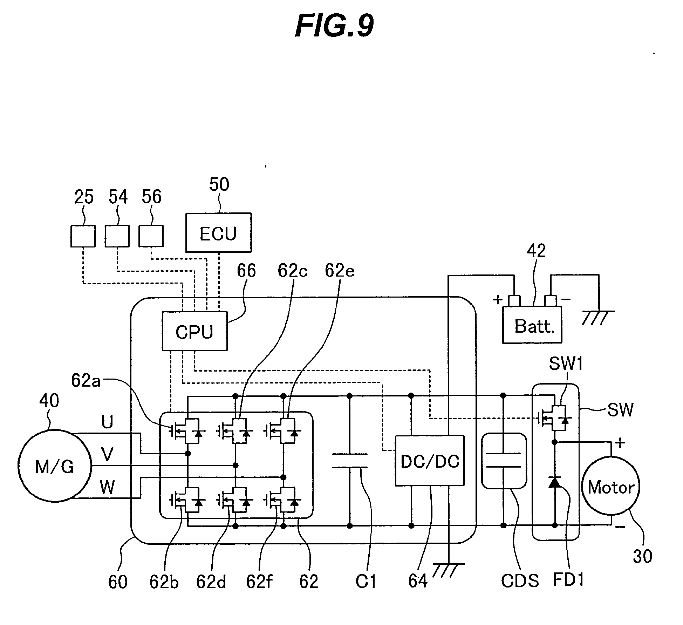

The construction of an electrical power train of a vehicle according to a third embodiment of the present invention will be described below with reference to Fig. 9. The overall construction of a 4-wheel-drive vehicle in which is employed the electrical power train of the vehicle according to the third embodiment is similar to that shown in Fig. 1.

Fig. 9 is a block diagram of the electrical power train of the vehicle according to the third embodiment of the present invention. Note that the same reference numerals as those in Figs. 1, 2 and 7 denote the same components.

While the storage device (capacitor) CDS shown in Fig. 2 is disposed inside the motor controller 60, the storage device CDS in this third embodiment is disposed outside the motor controller 60 and is connected to the semiconductor switch SW in parallel. The storage device CDS may be constituted, instead of an electrostatic capacitor, by an electrolytic capacitor or a battery. In addition, a capacitor C1 is connected to the inverter 62 in parallel. The capacitor C1 serves to smooth a ripple generated with the switching operation of the inverter 62 and has small capacitance of about 0.005 F, for example.

With the arrangement described above, since electric power can be transferred among the motor 30, the motor generator 40, and the vehicle-loaded battery 42, the capacity of the storage device CDS can be made smaller and the inverter 62 is required just for one motor, thus resulting in a reduction of the power train size.

According to the third embodiment, as described above, since only one generator is used, limitations imposed on layout are reduced. Also, even when a high driving force is required in a transient state, e.g., in the case of a slip, the required driving force can be obtained at once without a response delay. Further, a reduction in size and cost can be realized.

In addition, since the engine can be stopped for the purpose of stopping idle, fuel economy is improved.

The above-mentioned features and embodiments can be combined in any way, partly or as a whole.

## Claims

1. An electrical power train of a vehicle in which at least one of a plurality of wheels (26A, 26B, 36A, 36B) is driven by an internal combustion engine, said electrical power train comprising:
a DC motor (30) for driving at least one remaining wheel of said plurality of wheels (26A, 26B, 36A, 36B); and
a motor generator (40) receiving AC power and producing a driving force to drive said internal combustion engine, and driven by said internal combustion engine to generate AC power.

2. The electrical power train of the vehicle according to Claim 1, further comprising a single inverter (62) for converting an alternating current to a direct current and converting a direct current to an alternating current, the AC side of said inverter (62) being connected to said motor generator (40), the DC side of said inverter (62) being connected to said DC motor (30).

3. The electrical power train of the vehicle according to at least one of Claims 1-2, further comprising control means for controlling said inverter (62) and said motor generator (40),
wherein said control means PWM-drives said motor generator (40) through said inverter (62) in accordance with vector control.

4. The electrical power train of the vehicle according to at least one of Claims 1-3, further comprising:
a DC/DC converter (64) for converting DC power converted by said inverter (62) to a low-voltage DC power; and
a single low-voltage battery (42) for storing the low-voltage DC power converted by said DC/DC converter (64).

5. The electrical power train of the vehicle according to at least one of Claims 1-4, further comprising an storage device (CDS) for storing the high-voltage DC power converted by said inverter (62),
wherein when said internal combustion engine is started after stop of idling, the driving force is produced from said motor generator (40) by using the power stored in said storage device (CDS) in addition to the power stored in said low-voltage battery (42), thereby starting said internal combustion engine.

6. The electrical power train of the vehicle according to at least one of Claims 1-5, further comprising cutoff means (RY1) disposed between said storage device (CDS) and said DC motor (30) and electrically cutting off application of the voltage of said storage device (CDS) to said DC motor (30).

7. The electrical power train of the vehicle according to at least one of Claims 1- 6, wherein said cutoff means (RY1) is capable of controlling a voltage applied to said DC motor (30), and
said control means (66) controls said cutoff means (RY1) to control the voltage applied to said DC motor (30) from said storage device (CDS) when said vehicle is started.

8. The electrical power train of the vehicle according to at least one of Claims 1-7 , wherein said control means (66) performs control to stored power in said storage device (CDS) before stop of idling of said internal combustion engine.

9. An electrical power train of a vehicle in which at least one of a plurality of wheels (26A, 26B, 36A, 36B) is driven by an internal combustion engine, said electrical power train comprising:
a DC motor (30) for driving at least one remaining wheel of said plurality of wheels (26A, 26B, 36A, 36B);
a motor generator (40) receiving AC power and producing a driving force to drive said internal combustion engine, and driven by said internal combustion engine to generate AC power; and
an inverter (62) for converting an alternating current to a direct current and converting a direct current to an alternating current, the AC side of said inverter (62) being connected to said motor generator (40), the DC side of said inverter (62) being connected to said DC motor (30).

10. The electrical power train of the vehicle according to Claim 9, further comprising control means (66) for controlling said inverter (62) and said motor generator (40),
wherein said control means (66) PWM-drives said motor generator (40) through said inverter (62) in accordance with vector control.

11. An electrical power train of a vehicle in which at least one of a plurality of wheels (26A, 26B, 36A, 36B) is driven by an internal combustion engine, said electrical power train comprising:
a DC motor (30) for driving at least one remaining wheel of said plurality of wheels (26A, 26B, 36A, 36B);
a motor generator (40) receiving AC power and producing a driving force to drive said internal combustion engine, and driven by said internal combustion engine to generate AC power;
a single inverter (62) for converting an alternating current to a direct current and converting a direct current to an alternating current, the AC side of said inverter being connected to said motor generator (40), the DC side of said inverter being connected to said DC motor (30);
a DC/DC converter (64) for converting DC power converted by said inverter (62) to a low-voltage DC power; and
a single low-voltage battery (42) for storing the low-voltage DC power converted by said DC/DC converter (64).

12. An electrical power train of a vehicle in which at least one of a plurality of wheels (26A, 26B, 36A, 36B) is driven by an internal combustion engine, said electrical power train comprising:
a DC motor (30) for driving at least one remaining wheel of said plurality of wheels (26A, 26B, 36A, 36B);
a motor generator (40) receiving AC power and producing a driving force to drive said internal combustion engine, and driven by said internal combustion engine to generate AC power;
a single inverter (62) for converting an alternating current to a direct current and converting a direct current to an alternating current, the AC side of said inverter being connected to said motor generator (40), the DC side of said inverter (62) being connected to said DC motor (30);
a DC/DC converter (64) for converting DC power converted by said inverter (62) to a low-voltage DC power;
a single low-voltage battery (42) for storing the low-voltage DC power converted by said DC/DC converter (64); and
an storage device (CDS) for storing the high-voltage DC power converted by said inverter (62),
wherein when said internal combustion engine is started after stop of idling, the driving force is produced from said motor generator (40) by using the power stored in said storage device (CDS) in addition to the power stored in said low-voltage battery (42), thereby starting said internal combustion engine.
